# FASCICULE DE BREVET EUROPEEN

(11) **EP 1 855 968 B1**
(45) Date de publication et mention de la délivrance du brevet: **29.07.2009**
(21) Numéro de dépôt: 06725997.8
(22) Date de dépôt: 28.02.2006
(51) Int. Cl.: B65G 47/36

(54) **DISPOSITIF DE CONVOYAGE DE RECIPIENTS TELS QUE DES PREFORMES**
FÖRDERVORRICHTUNG FÜR BEHÄLTER WIE VORFORMEN
CONVEYOR DEVICE FOR CONTAINERS SUCH AS PREFORMS

(30) Priorité: 02.03.2005 FR 0502119
(43) Date de publication de la demande: 21.11.2007
(73) Titulaire: Sidel Participations, 76930 Octeville Sur Mer (FR)
(72) Inventeur: CHARPENTIER, Alain c/o SIDEL, 76930 Octeville-sur-Mer (FR)
(74) Mandataire: Bérogin, Francis
(86) Numéro de dépôt international: PCT/FR2006/000454
(87) Numéro de publication internationale: WO 2006/092499

(56) Documents cités:
- EP-A- 0 452 857
- EP-A- 0 875 470
- US-A- 4 802 571
- PATENT ABSTRACTS OF JAPAN vol. 2000, no. 20, 10 juillet 2001 (2001-07-10) -& JP 2001 063807 A (SAKAMOTO ENGINEERING:KK), 13 mars 2001 (2001-03-13)

## Description

La présente invention concerne d'une façon générale le convoyage ou transfert de récipients et, plus spécifiquement, elle vise des perfectionnements apportés aux dispositifs de convoyage propres à déplacer sensiblement rectilinéairement et sensiblement horizontalement des récipients, notamment en matériau thermoplastique, comportant une collerette à la base de leur col.

Notamment dans les installations de fabrication de récipients tels que des bouteilles et de conditionnement des produits dans ces récipients, les récipients sont déplacés par des dispositifs de transfert ou de convoyage qui appartiennent à de nombreux types (convoyeurs à bandes sans fin, roues à encoches ou à bras, convoyeurs sans fin à tournettes, glissières à air pulsé, glissières inclinées à déplacement par.gravité, ...).

En particulier, à l'entrée d'une installation propre à la fabrication de récipients à partir de préformes, les préformes doivent être alimentées les unes à la suite des autres sans discontinuité et être poussées pour pénétrer dans un organe de chargement (par exemple dans les encoches périphériques d'une roue de chargement).

De façon courante, les caractéristiques d'alimentation correcte des préformes à l'entrée de l'installation sont obtenues en mettant en oeuvre un dispositif d'alimentation à toboggan à glissière : les préformes, amenées au sommet du toboggan, glissent, sous l'action de la gravité, sur la glissière sur les deux rampes de laquelle elles reposent en position sensiblement verticale par leur collerette ; compte tenu de la vitesse de saisie des préformes en bas du toboggan qui est sensiblement inférieure à la vitesse d'avance des préformes sur le toboggan, les préformes s'entassent les unes à la suite des autres le long de la glissière et la composante de poids de ces préformes entassées sur la glissière force la préforme de tête à pénétrer dans l'organe de chargement.

L'ensemble du dispositif d'alimentation (non seulement le toboggan, mais aussi la trémie de réception des préformes en vrac située en amont du toboggan, l'élévateur de préformes et certains organes annexes) constitue une unité volumineuse et, dans les installations de très grande capacité capables de produire plusieurs milliers, voire plusieurs dizaines de milliers de récipients à l'heure, cette unité est de très grandes dimensions, et notamment peut avoir une hauteur de plusieurs mètres. Cela rend indispensable d'adjoindre à la trémie un matériel de sécurité approprié (passerelle avec rambarde, échelle avec rambarde) pour le personnel de surveillance et d'entretien. Il en résulte que l'ensemble du dispositif d'alimentation, en général métallique, coûte très cher et est très encombrant, aussi bien au sol que surtout verticalement.

On peut ajouter en outre que les préformes, en position sensiblement verticale, ne reposent sur les deux rampes de la glissière inclinée que par deux points de leur collerette et cet appui médiocre conduit les préformes à avancer sur la glissière de façon irrégulière et avec balancement, ce qui se révèle désavantageux (risque de coincement dans la glissière ou d'éjection de préformes hors de la glissière).

On connaît également, d'après le document EP 0 452 857, un dispositif de convoyage du type précité qui comporte deux convoyeurs équipés chacun d'un lien sans fin possèdant deux brins, les deux brins mobiles en vis-à-vis qui appartiennent respectivement aux deux convoyeurs étant sensiblement parallèles et sensiblement horizontaux et étant entraînés dans le même sens et sensiblement à la même vitesse, ces deux brins étant écartés l'un de l'autre d'une distance supérieure au diamètre du corps des récipients et inférieure au diamètre de la collerette des récipients de manière telle que les récipients reposent en position sensiblement verticale sur les deux brins par leur collerette.

Bien que ce dispositif connu puisse répondre à l'attente des utilisateurs pour ce qui est d'un moindre coût de fabrication et d'un encombrement moindre notamment verticalement, il ne résout toutefois pas certains problèmes qui se posent dans la phase d'alimentation des préformes, en particulier pour ce qui est de l'élimination des préformes indésirables (préformes défectueuses, préformes emboîtées l'une dans l'autre, etc).

L'invention a précisément pour objet de répondre à cette attente.

A ces fins, l'invention propose un dispositif de convoyage selon la revendication 1. de la collerette des récipients de manière telle que les récipients reposent en position sensiblement verticale sur les deux brins par leur collerette, lequel dispositif, étant agencé conformément à l'invention, se caractérise en ce qu'au moins un des convoyeurs comporte au moins un court tronçon déplaçable transversalement vers l'extérieur de manière que, sur une longueur du brin dudit convoyeur qui correspond approximativement au diamètre de la collerette d'un récipient, l'écartement des deux brins en vis-à-vis devienne supérieur à l'écartement nominal et au diamètre de la collerette, ce grâce à quoi le récipient correspondant n'est plus soutenu et tombe. Un tel agencement rend possible, grâce à la mise en oeuvre de moyens simples actionnables temporairement, l'élimination de récipients indésirables, tels que par exemple des préformes emboîtées ou des préformes présentant un défaut.

De façon avantageuse, les deux convoyeurs sont du type "à plat" et les deux liens sans fin s'enroulent dans sensiblement un même plan sensiblement horizontal autour de roues de renvoi d'axes respectifs sensiblement verticaux, de sorte qu'on définit ainsi de façon simple un passage central libre pour les préformes.

Avantageusement également, on prévoit que la vitesse de déplacement des deux brins, et donc des récipients, est supérieure à la vitesse de saisie des récipients à la sortie du dispositif, ce grâce à quoi des récipients sont accolés les uns contre les autres au voisinage de la sortie et sont poussés à la sortie du dispositif. Ainsi, grâce au choix d'une vitesse appropriée des brins mobiles du lien sans fin de transport par rapport à la vitesse de saisie des récipients en sortie, le dispositif est apte à procurer l'accumulation des préformes nécessaire pour forcer les préformes dans l'organe de chargement.

Toujours de façon simple, les deux convoyeurs peuvent être entraînés à sensiblement la même vitesse par des moyens moteurs uniques.

Dans un mode de réalisation possible qui est très simple à mettre en oeuvre et qui -peut s'avérer très intéressant au moins pour certaines applications, les deux liens sans fin sont des fils.

Dans un autre mode de réalisation possible qui est préféré notamment pour les installations de grande capacité que produit la Demanderesse, les deux liens sans fin sont des bandes sans fin, et notamment sont des bandes sans fin sensiblement rigides transversalement disposées verticalement.

Un tel agencement à bandes sans fin sensiblement rigides transversalement disposées verticalement se révèle particulièrement intéressant pour les variantes de réalisation qu'elles autorisent. Ainsi, il devient possible de prévoir qu'au moins un convoyeur soit monté sur un bâti déplaçable transversalement de manière que la distance d'écartement des deux brins sensiblement parallèles puisse être ajustée en fonction du diamètre du corps des récipients et du diamètre de la collerette des récipients. Il est alors souhaitable que les deux convoyeurs soient montés sur des bâtis respectifs déplaçables transversalement de façon symétrique de manière que la trajectoire de déplacement de l'axe des récipients reste alignée avec des dispositifs situés en amont et/ou en aval. Ces dispositions autorisent qu'un même dispositif de convoyage puisse être adapté, de façon simple, au traitement de récipients ayant des caractéristiques dimensionnelles différentes.

Comme cela ressort clairement des explications qui précèdent, le dispositif de convoyage conforme à l'invention peut trouver application pour le convoyage de nombreux types de récipients équipés de collerette à la base du col. Une application préférée, bien que non exclusive, concerne l'alimentation des préformes à l'entrée d'une installation de fabrication de récipients, les préformes étant délivrées en position verticale col en haut, les préformes étant déplacées par entraînement positif sur un trajet qui peut être sensiblement horizontal. On écarte ainsi les inconvénients précités des dispositifs à entraînement par gravité : le dispositif selon l'invention ne nécessite pas un local de hauteur particulière pour son implantation et il peut être disposé à hauteur d'homme de sorte que tous les accessoires de sécurité nécessaires pour le travail du personnel en hauteur peuvent être éliminés.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
la figure 1 est une figure très schématique, en vue de dessus, d'une partie d'un agencement de base d'un dispositif de convoyage visé par l'invention montré dans le contexte de l'alimentation en préformes, d'une installation de fabrication de récipients ;
- la figure 2 est une figure très schématique, en vue de dessus, d'un mode de réalisation préféré d'un dispositif de convoyage conforme à l'agencement de base de la figure 1 ;
- la figure 3A est une vue en coupe transversale d'un mode de réalisation intéressant d'un dispositif de convoyage visé par l'invention ;
- la figure 3B est une vue en coupe transversale d'un autre mode de réalisation préféré d'un dispositif de convoyage visé par l'invention ;
- la figure 4 est une vue en coupe transversale d'un mode de réalisation préféré d'une partie d'un dispositif de convoyage visé par l'invention ; et
- les figures 5A et 5B sont des vues en coupe transversale d'un dispositif de convoyage agencé conformément à l'invention, montré dans deux positions fonctionnelles différentes.

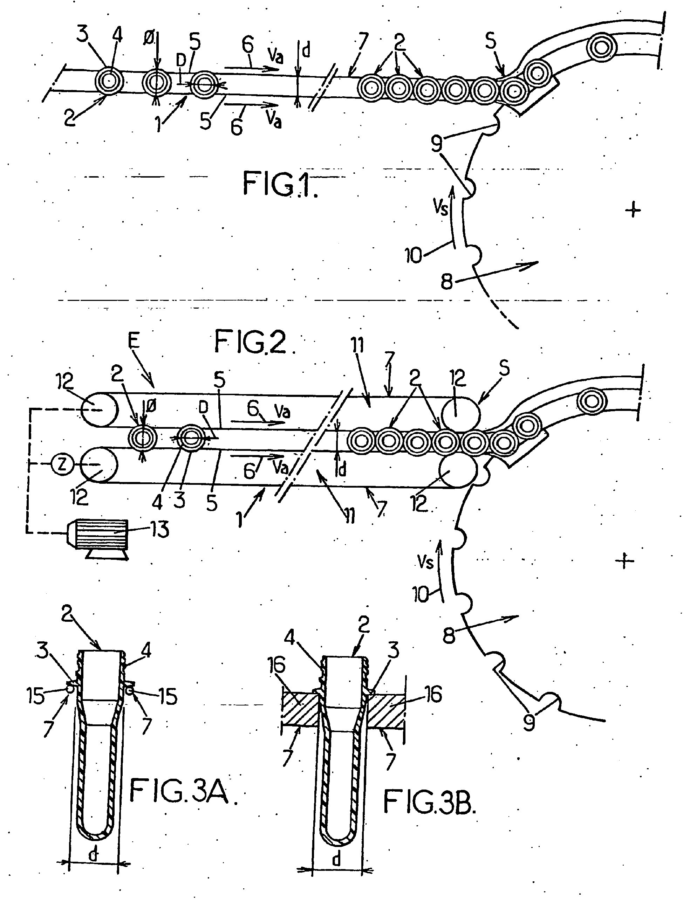

En se référant tout d'abord à la figure 1, il y est représenté, de façon très schématique, un dispositif de convoyage, désigné dans son ensemble par la référence 1, propre à déplacer sensiblement rectilinéairement et sensiblement horizontalement des récipients 2 tels que des préformes, notamment en matériau thermoplastique tel que du PET, munis d'une collerette 3 à la base de leur col 4. Le dispositif de convoyage 1 comporte deux liens sans fin désignés dans leur ensemble par la référence 7, ayant chacun un brin 5 mobile selon les flèches 6. Ces deux brins 5 sont sensiblement parallèles et sensiblement horizontaux et sont entraînés dans le même sens (flèches 6) et sensiblement à la même vitesse Va. En outre, ces deux brins 5 sont écartés l'un de l'autre d'une distance d supérieure au diamètre D du corps et/ou du col 4 des récipients 2 et inférieure au diamètre Φ de la collerette 3 des récipients 2 de manière telle que les récipients 2 reposent en position sensiblement verticale sur les deux brins 5 par leur collerette 3. Enfin, la vitesse de déplacement Va des deux brins 5, et donc des récipients 2 introduits dans le dispositif de convoyage 1, est supérieure à la vitesse Vs de saisie des récipients 2 à la sortie S du dispositif de convoyage. Ainsi, des récipients 2 sont accolés les uns contre les autres au moins au voisinage de la sortie S comme illustré à la figure 1, de sorte que le récipient 2 situé en tête est soumis à une poussée tendant à le faire sortir du dispositif de convoyage pour être saisi par exemple par une vis sans fin de chargement (non montrée) et/ou par une roue 8 de chargement (sens de rotation repéré par la flèche 10) munie d'encoches 9.

Le dispositif de convoyage 1 peut être constitué de toute façon appropriée propre à l'obtention de deux brins 5 ayant les caractéristiques ci-dessus et notamment parallèles et de même vitesse. Toutefois, il s'avère que la réalisation du dispositif de convoyage avec un seul lien 7 sans fin enroulé de façon appropriée sur des renvois convenablement disposés est certes possible, mais complexe et peu pratique à mettre en oeuvre. Aussi, on préférera concrètement, comme illustré à la figure 2, faire comporter au dispositif de convoyage 1 deux convoyeurs 11 équipés chacun d'un lien 7 sans fin qui inclut respectivement un des deux susdits brins 5. Dans un mode de réalisation préféré montré à la figure 2, les deux convoyeurs 11 sont du type "à plat" et les deux liens 7 sans fin s'enroulent dans sensiblement un même plan sensiblement horizontal autour de roues 12 de renvoi d'axes sensiblement verticaux situées à l'entrée E et à la sortie S du dispositif de convoyage 1.

Pour simplifier la structure du dispositif de convoyage 1 et en réduire le coût, il est envisageable que les deux liens 7 sans fin des deux convoyeurs 11 respectifs soient entraînés à sensiblement la même vitesse par des moyens moteurs 13 uniques, l'un des convoyeurs 11 étant entraîné en sens inverse de l'autre grâce à un inverseur 14 de sens de rotation comme montré à la figure 2.

Pour ce qui concerne maintenant les liens 7 sans fin susceptibles d'être mis en oeuvre dans le contexte de la présente invention, ils peuvent être de tout type approprié connu de l'homme du métier.

Une première solution remarquable par sa simplicité consiste, comme représenté sur la vue en coupe transversale de la figure 3A, à réaliser les deux liens 7 sans fin sous forme de fils 15 respectifs en tout matériau suffisamment résistant pour supporter l'effort d'entraînement communiqué par les moyens moteurs 13. En particulier, les deux fils 15 peuvent être métalliques, notamment en acier inoxydable, et avoir un diamètre relativement faible tout en présentant la résistance mécanique nécessaire.

Dans un exemple de réalisation préféré, une seconde solution consiste, comme représenté sur la vue en coupe transversale de la figure 3B, à réaliser les deux liens 7 sans fin sous forme de bandes 16 respectives, lesquelles sont de préférence disposées verticalement de manière à présenter la souplesse requise pour leur enroulement sur les roues 12 de renvoi d'axe vertical. Les deux bandes 16 peuvent être agencées de toute façon souhaitable en fonction de l'application et/ou de la structure du dispositif de convoyage et se présenter soit sous forme de bandes continues, soit sous forme de bandes formées de tronçons successifs bout à bout articulés les uns aux autres par des axes verticaux. Les bandes 16 peuvent être constituées en tout matériau approprié, par exemple en aluminium, en acier inoxydable ou avantageusement en matière synthétique telle qu'un polyamide.

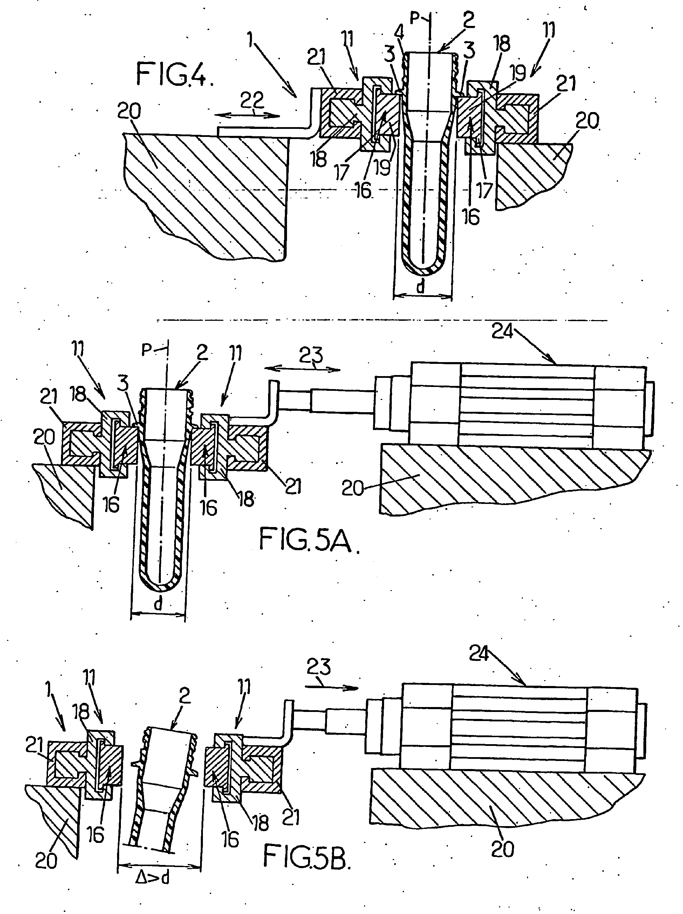

A la figure 4 est montré, en coupe transversale, un exemple concret de réalisation de la partie utile des deux convoyeurs 11 (les brins de retour des convoyeurs ne sont pas montrés) agencés de façon appropriée pour satisfaire les besoins de l'invention. Chaque bande 16 présente en section transversale la forme approximative d'un T couché dont la tête 17 est engagée à libre glissement dans un profilé 18 en forme de gouttière ouverte tandis que la tige 19 du T fait saillie hors du profilé et reçoit en appui, sur son bord supérieur, la collerette 3 du récipient 2. Le profilé 18 est lui-même fixé de toute façon souhaitable sur un bâti 20 ; par exemple, comme illustré à la figure 4, le profilé 18 est réalisé en matériau synthétique choisi de manière que le coefficient de glissement avec le matériau constitutif de la bande 16 soit aussi faible que possible, et est emboîté dans un profilé 21 métallique (par exemple aluminium ou acier inoxydable) qui est fixé au bâti 20.

Les convoyeurs 11 agencés comme il vient d'être exposé sont d'une mise en oeuvre très souple car, en ayant recours à des bandes 16 formées d'éléments assemblés, il est possible de moduler la longueur de ces convoyeurs très simplement en fonction des configurations spécifiques de chaque installation.

En outre, cet agencement permet la mise en oeuvre de certaines dispositions particulières très pratiques. Notamment, une disposition particulière, qui est montrée à la figure 4, consiste en ce qu'au moins un convoyeur 11 (celui de gauche sur la figure 4) est monté sur un bâti 20 qui est déplaçable transversalement (flèche 22) de manière que la distance d d'écartement des deux bandes 16 sensiblement parallèles puisse être ajustée en fonction du diamètre D du corps et/ou du col 4 et du diamètre Φ de la collerette 3 des récipients 2. Avantageusement alors, on peut prévoir que les deux convoyeurs 11 soient montés sur des bâtis 20 respectifs déplaçables transversalement de façon symétrique par rapport au plan P médian des deux bandes 16 de telle manière que l'axe de circulation des préformes demeure inchangé et reste coaxial aux dispositifs d'entrée et de sortie. L'agencement qui vient d'être exposé permet d'étendre le domaine d'utilisation du dispositif de convoyage 1 puisqu'il devient ainsi apte à accepter des préformes de diamètres différents.

L'agencement conforme à l'invention, qui est illustré dans deux positions fonctionnelles différentes aux figures 5A et 5B respectivement, consiste en ce qu'au moins un des deux convoyeurs 11 comporte au moins un court tronçon déplaçable temporairement transversalement vers l'extérieur (flèche 23) de manière que, sur une longueur dudit brin qui correspond approximativement au diamètre Φ de la collerette 3 d'un récipient 2, l'écartement Δ des deux bandes 16 en vis-à-vis devienne supérieur à sa valeur nominale d et au diamètre Φ de la collerette 3. Lorsque les deux bandes 16 sont ainsi écartées, la collerette n'est plus en appui stable et le récipient 2 correspondant trombe (figure 5B). Sur le tronçon concerné, l'agencement des profilés 18, 21 n'est plus solidaire du bâti 20, mais est suspendu à un organe moteur 24 qui est lui-même porté par le bâti 20. Le déplacement du tronçon du convoyeur 11 concerné est commandé par l'organe moteur 24 (par exemple électrique ou pneumatique), placé sous la dépendance d'une unité de commande appropriée. L'agencement qui vient d'être exposé, qui est structurellement simple à réaliser et à mettre en oeuvre, permet d'éliminer des préformes indésirables (préformes défectueuse, préformes emboîtées, ...). On soulignera que le déplacement (flèche 23) imprimé par l'organe moteur 24 à un tronçon d'un convoyeur est indépendant du déplacement (flèche 22) d'adaptation de l'écartement des deux convoyeurs du dispositif de convoyage en fonction du diamètre des préformes à déplacer ; par contre, la partie mobile de l'organe moteur 24 doit accompagner le convoyeur concerné dans son déplacement d'adaptation au diamètre des préformes à transporter.

## Revendications

1. Dispositif de convoyage (1) pour déplacer sensiblement rectilinéairement et sensiblement horizontalement des récipients (2), notamment en matériau thermoplastique, comportant une collerette (3) à la base de leur col (4), lequel dispositif comportant deux convoyeurs (11) équipés chacun d'un lien (7) sans fin possédant chacun deux brins, les deux brins (5) mobiles en vis-à-vis qui appartiennent respectivement aux deux convoyeurs étant sensiblement parallèles et sensiblement horizontaux et étant entraînés dans le même sens (flèches 6) et sensiblement à la même vitesse (Va), ces deux brins (5) étant écartés l'un de l'autre d'une distance (d) supérieure au diamètre (D) du corps des récipients (2) et inférieure au diamètre (Φ) de la collerette (3) des récipients (2) de manière telle que les récipients (2) reposent en position sensiblement verticale sur les deux brins (5) par leur collerette (3), **caractérisé en ce qu'**au moins un convoyeur (11) comporte au moins un court tronçon déplaçable transversalement (en 23) vers l'extérieur de manière que, sur une longueur du brin (5) dudit convoyeur (11) qui correspond approximativement au diamètre (Φ) de la collerette (3) d'un récipient (2), l'écartement (Δ) des deux brins (5) en vis-à-vis devienne supérieur à l'écartement nominal (d) et au diamètre (Φ) de la collerette (3), ce grâce à quoi le récipient correspondant n'est plus soutenu et tombe.

2. Dispositif selon la revendication 1, **caractérisé en ce que** les deux convoyeurs (11) sont du type "à plat" et **en ce que** les deux liens (7) sans fin s'enroulent dans sensiblement un même plan sensiblement horizontal autour de roues (12) de renvoi d'axes sensiblement verticaux.

3. Dispositif selon la revendication 1 ou 2, **caractérisé en ce que** la vitesse (Va) de déplacement des deux brins (5), et donc des récipients (2), est supérieure à la vitesse (Vs) de saisie des récipients (2) à la sortie (S) du dispositif, ce grâce à quoi des récipients (2) sont accolés les uns contre les autres au voisinage de la sortie (S) et sont poussés à la sortie -du dispositif.

4. Dispositif selon l'une quelconque des revendications 1 à 3, **caractérisé en ce que** les deux convoyeurs (11) sont entraînés à sensiblement la même vitesse par des moyens moteurs (13) uniques.

5. Dispositif selon l'une quelconque des revendications 1 à 4, **caractérisé en ce que** les deux liens (7) sans fin sont des fils (15).

6. Dispositif selon l'une quelconque des revendications 1 à 4, **caractérisé en ce que** les deux liens (7) sans fin sont des bandes (16).

7. Dispositif selon la revendication 6, **caractérisé en ce que** les deux liens (7) sans fin sont des bandes (16) disposées verticalement.

8. Dispositif selon l'une quelconque des revendications 1 à 7, **caractérisé en ce qu'**au moins un convoyeur (11) est monté sur un bâti (20) déplaçable transversalement de manière que la distance (d) d'écartement des deux brins (5) sensiblement parallèles puisse être ajustée en fonction du diamètre (D) du corps et/ou du col des récipients (2) et du diamètre (Φ) de la collerette (3) des récipients (2).

9. Dispositif selon la revendication 8, **caractérisé en ce que** les deux convoyeurs (11) sont montés sur des bâtis (20) respectifs déplaçables transversalement (en 22) de façon symétrique par rapport à un plan (P) médian.

## Claims

1. A conveyor device (1) for moving, substantially rectilinearly and substantially horizontally, containers (2), in particular made of thermoplastic material, comprising a collar (3) at the base of their neck (4), said device comprising two conveyors (11) each provided with one endless link (7) which has two strands, the two moving facing strands (5) which belong respectively to said two conveyors being substantially parallel and substantially horizontal and being driven in the same direction (arrows 6) and substantially at the same speed (Va), these two strands (5) being separated from each other by a distance (d) greater than the diameter (D) of the body of the containers (2) and less than the diameter (Φ) of the collar (3) of the containers (2) such that the containers (2) rest in a substantially vertical position on the two strands (5) by their collar (3),
**characterized in that** at least one conveyor (11) comprises at least one short segment which is movable transversely (at 23) towards the outside such that, over a length of the strand (5) of said conveyor (11) which corresponds approximately to the diameter (Φ) of the collar (3) of a container (2), the separation (Δ) between the two facing strands (5) becomes greater than the nominal separation (d) and than the diameter (Φ) of the collar (3), whereby the corresponding container is no longer supported and falls.

2. The device as claimed in claim 1, **characterized in that** the two conveyors (11) are of the "flat" type and **in that** the two endless links (7) run substantially in the same horizontal plane around return wheels (12) with substantially vertical axes.

3. The device as claimed in claim 1 or 2, **characterized in that** the speed (Va) of movement of the two strands (5), and therefore of the containers (2), is greater than the speed (Vs) of grasping containers (2) at the exit (S) of the device, whereby containers (2) are pressed against each other in the vicinity of the exit (S) and are pushed at the exit of the device.

4. The device as claimed in any one of claims 1 to 3, **characterized in that** the two conveyors (11) are driven at substantially the same speed by unique driving means (13).

5. The device as claimed in any one of claims 1 to 4, **characterized in that** the two endless links (7) are wires (15).

6. The device as claimed in any one of claims 1 to 4, **characterized in that** the two endless links (7) are belts (16).

7. The device as claimed in claim 6, **characterized in that** the two endless links (7) are vertically disposed belts (16).

8. The device as claimed in any one of claims 1 to 7, **characterized in that** at least one conveyor (11) is mounted on a transversely movable frame (20) in such a way that the separation distance (d) between the two substantially parallel strands (5) can be adjusted according to the diameter (D) of the body and/or of the neck of the containers (2) and to the diameter (Φ) of the collar (3) of the containers (2).

9. The device as claimed in claim 8, **characterized in that** the two conveyors (11) are mounted on respective frames (20) which are transversely movable (at 22) in a symmetrical manner with respect to a median plane (P).

## Patentansprüche

1. Fördervorrichtung (1) zum im Wesentlichen geradlinigen und im Wesentlichen horizontalen Bewegen von Behältern (2), insbesondere aus Thermoplastikmaterial, die einen Kragen (3) an der Basis ihres Halses (4) aufweisen, wobei die Vorrichtung zwei jeweils mit einem endlosen Band (7) ausgestattete Förderer (11) aufweist, wobei jedes zwei Zugdrähte besitzt, wobei die entsprechend an den zwei Förderern vorgesehenen zwei gegenüberliegenden beweglichen Zugdrähte (5) im Wesentlichen parallel und im Wesentlichen horizontal sind und in der gleichen Richtung (Pfeile 6) und im Wesentlichen mit der gleichen Geschwindigkeit (Va) angetrieben werden, wobei die zwei Zugdrähte (5) voneinander in einer zum Durchmesser (D) des Körpers der Behälter (2) größeren und zum Durchmesser (Φ) des Kragens (3) der Behälter (2) kleineren Distanz (d) derart entfernt sind, dass die Behälter (2) in einer im Wesentlichen vertikalen Position auf den zwei Zugdrähten (5) mittels ihrer Kragen (3) gehalten werden,
**dadurch gekennzeichnet, dass** zumindest ein Förderer (11) zumindest einen kurzen Abschnitt aufweist, der derart quer nach außen verstellbar ist (Richtung 23), dass der Abstand (Δ) der zwei gegenüberliegenden Zugdrähte (5) über eine ungefähr dem Durchmesser (Φ) des Kragens (3) eines Behälters (2) entsprechende Länge des Zugdrahts (5) des Förderers (11) größer als der Nennabstand (d) und als der Durchmesser (Φ) des Kragens (3) wird, wodurch der entsprechende Behälter nicht mehr gestützt wird und hinunterfällt.

2. Vorrichtung gemäß Anspruch 1, **dadurch gekennzeichnet, dass** die zwei Förderer (11) flach sind, und **dadurch**, dass sich die endlosen Bänder (7) in einer im Wesentlichen gleichen, im Wesentlichen horizontalen Ebene um Umlenkrollen (12) mit im Wesentlichen vertikalen Achsen wickeln.

3. Vorrichtung gemäß Anspruch 1 oder 2, **dadurch gekennzeichnet, dass** die Geschwindigkeit (Va) der Bewegung der zwei Zugdrähte (5), und folglich der Behälter (2), größer ist als die Geschwindigkeit (Vs) der betroffenen Behälter (2) am Ausgang (S) der Vorrichtung, wodurch Behälter (2) gegenseitig in der Umgebung des Ausgangs (S) aneinandergefügt und zum Ausgang der Vorrichtung getrieben werden.

4. Vorrichtung gemäß einem der Ansprüche 1 bis 3, **dadurch gekennzeichnet, dass** die zwei Förderer (11) mit im Wesentlichen der gleichen Geschwindigkeit mittels einzelner Motoren (13) angetrieben werden.

5. Vorrichtung gemäß einem der Ansprüche 1 bis 4, **dadurch gekennzeichnet, dass** die zwei endlosen Bänder (7) Drähte (15) sind.

6. Vorrichtung gemäß einem der Ansprüche 1 bis 4, **dadurch gekennzeichnet, dass** die zwei endlosen Bänder (7) Streifen (16) sind.

7. Vorrichtung gemäß Anspruch 6, **dadurch gekennzeichnet, dass** die zwei endlosen Bänder (7) vertikal angeordnete Streifen (16) sind.

8. Vorrichtung gemäß einem der Ansprüche 1 bis 7, **dadurch gekennzeichnet, dass** zumindest ein Förderer (11) an einem Rahmen (20) befestigt ist, der derart quer verstellbar ist, dass die Distanz (d) des Abstandes der zwei im Wesentlichen parallelen Zugdrähte (5) entsprechend dem Durchmesser (D) des Körpers und/oder des Halses der Behälter (2) und dem Durchmesser (Φ) des Kragens (3) der Behälter (2) angepasst werden kann.

9. Vorrichtung gemäß Anspruch 8, **dadurch gekennzeichnet, dass** die zwei Förderer (11) an entsprechend symmetrisch in Bezug auf eine Mittenebene (P) quer verstellbare (in Richtung 22) Rahmen (20) befestigt sind.
